# EUROPÄISCHE PATENTSCHRIFT

(11) **EP 3 246 673 B1**
(45) Veröffentlichungstag und Bekanntmachung des Hinweises auf die Patenterteilung: **19.08.2020**
(21) Anmeldenummer: 17171631.9
(22) Anmeldetag: 18.05.2017
(51) Int. Cl.: G01G 3/14, G01L 1/22

(54) **KRAFTMESSDOSE**
LOAD CELL
CELLULE DE CHARGE

(30) Priorität: 20.05.2016 DE 102016109292
(43) Veröffentlichungstag der Anmeldung: 22.11.2017
(73) Patentinhaber: Brosa AG, 88069 Tettnang (DE)
(72) Erfinder: Welzel, Christian, 9464 Rüthi (CH)
(74) Vertreter: Witte, Weller & Partner Patentanwälte mbB

(56) Entgegenhaltungen:
- EP-A2- 0 465 881
- DE-A1- 4 139 439
- DE-A1-102014 013 042
- DE-C2- 3 924 629

## Beschreibung

Die vorliegende Erfindung betrifft allgemein einen Kraftaufnehmer und insbesondere eine Kraftmessdose, die höchsten Belastungen standhält und insbesondere sehr unempfindlich auf quer eingeleitete (Stör-)Kräfte reagiert. Der Kraftaufnehmer der Erfindung kommt beispielsweise beim Wiegen von Gegenständen, in Prüfanlagen oder in Drehmomentstützen zum Einsatz.

Kraftmessdosen sind allgemein bekannt. Konventionelle Kraftmessdosen sind in der DE 38 37 683 A1 und der DE 39 24 629 C2 offenbart.

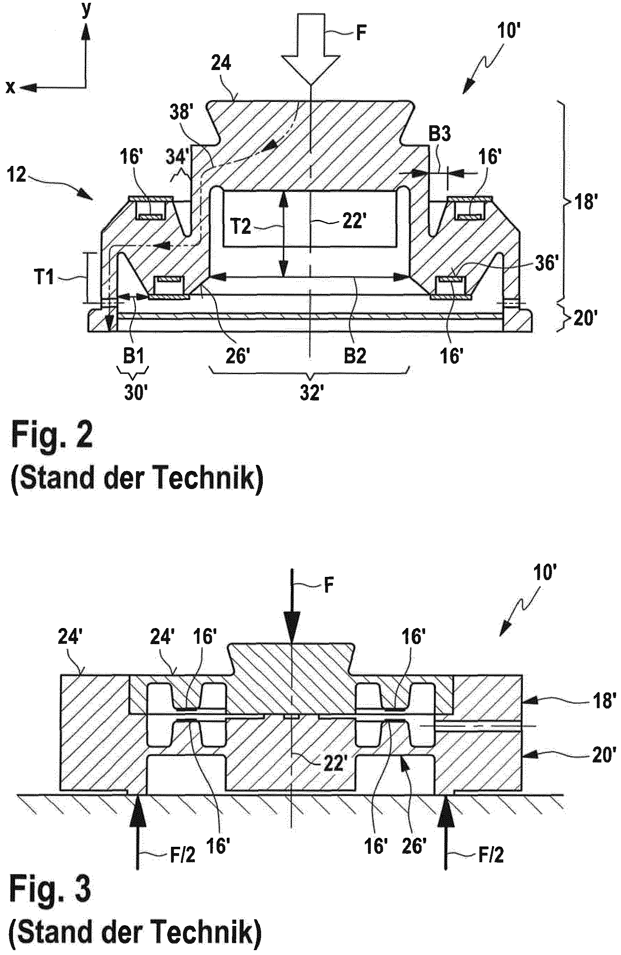

Aus der DE 39 24 629 C2 geht eine s-förmige bzw. z-förmige Bauform für den (Mess-) Körper einer Kraftmessdose hervor, die unempfindlich auf die Einleitung von Querkräften reagiert. Allerdings ist eine Herstellung dieser Kraftmessdose recht aufwändig, da sehr viele Nuten, Stufen und sonstige Vertiefungen und Bohrungen in den Messkörper eingearbeitet werden müssen. Zusätzlich müssen die zur Kraftmessung eingesetzten Dehnungsmessstreifen (DMS) an zwei sich gegenüberliegenden, unterschiedlichen Seiten des Messkörpers positioniert und befestigt werden. Die DMS, die zu einer Wheatstoneschen Vollbrücke verschaltet sind, werden sowohl auf einer äußeren Oberseite als auch an einer innen liegenden Unterseite des s- bzw. z-förmigen Messkörpers angebracht. Die Kraftmessdose der DE' 629 C2 ist in der Fig. 2 im Querschnitt gezeigt.

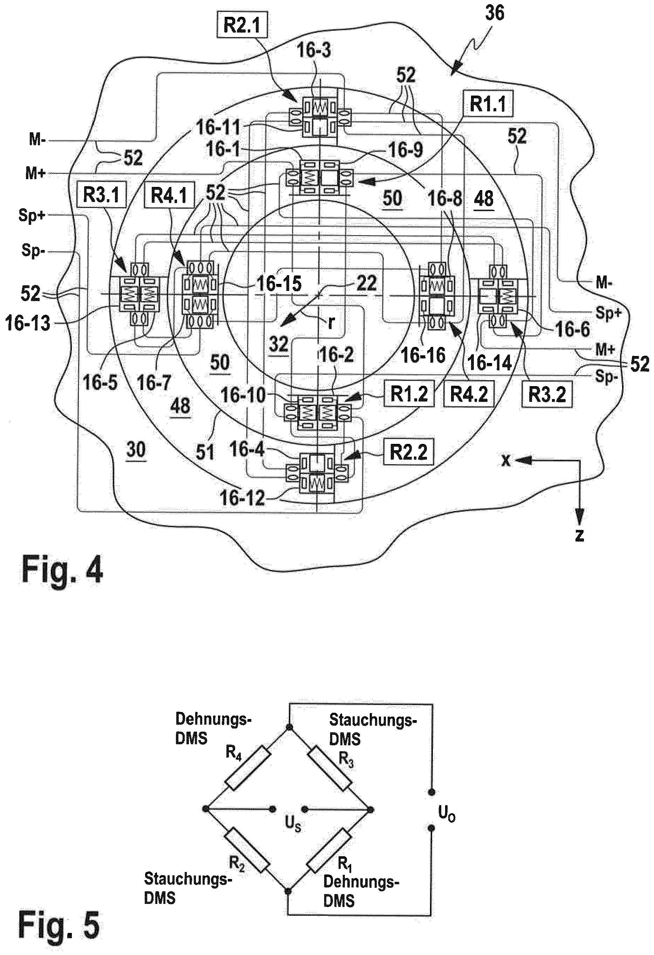

Eine Wheatstonesche DMS-Vollbrücke (vgl. Fig. 5) zeichnet sich allgemein dadurch aus, dass zwei Dehnungs-DMS sowie zwei Stauchungs-DMS jeweils paarweise zusammengeschaltet sind.

Bei der DE'629 C2 (vgl. Fig. 2) sitzen die Dehnungs-DMS in Nuten, die in der Oberseite des Messkörpers vorgesehen sind. Die Stauchungs-DMS sitzt in Nuten, die in der Unterseite des Messkörpers vorgesehen sind. Die DMS der Vollbrücke sitzen also auf axial unterschiedlichen Höhen. Sowohl die Dehnungs-DMS als auch die Stauchungs-DMS werden nach ihrer Anbringung am Messkörper mittels entsprechender Abdeckungen zur Umgebung hin verschlossen. Die Herstellung einer entsprechenden Kraftmessdose ist also ferner aufwändig und arbeitsintensiv, weil die verschiedenen DMS der DMS-Vollbrücke auf unterschiedlichen Seiten des Messkörpers angebracht (und entsprechend verkabelt) werden müssen.

Auch die Bauform des Körpers der vorbekannten Messdose gemäß der DE'683 A1 (vgl. Fig. 3) weist den Nachteil auf, dass die Dehnungs-DMS und die Stauchungs-DMS der Vollbrücke auf unterschiedlichen axialen Höhen angebracht sind. Dies bedeutet mit anderen Worten, dass die DMS der Vollbrücke an unterschiedlichen Orten bzw. unterschiedlichen Flächen des Messkörpers vorgesehen sind. Der Messkörper der DE'683 A1 ist zweiteilig in Form eines (unteren) Topfes mit formschlüssig angepassten (oberen) Deckel ausgebildet. Zwar sind die DMS der Vollbrücke alle innerhalb des Messkörpers angeordnet. Jedoch sind die DMS sowohl an der Unterseite des Deckels als auch auf der Oberseite des Topfes vorgesehen, was die Applikation der DMS, insbesondere deren Verkabelung, erschwert.

Außerdem ist die Bauform des Messkörpers der DE'683 A1 anfällig gegen Querkräfte, die nicht koaxial bzw. parallel zur Mittelachse des Messkörpers wirken.

Weiterer Stand der Technik ist durch die folgenden Dokumente repräsentiert: EP 0 465 881 A2, DE 10 2014 013 042 A1, DE 41 39 439 A1, DE 10 2006 034 086 A1, DE 41 39 439 A1, DE 34 38 498 A1, DE 2 244 615 C, DE 21 44 667 B2, DE 1 949 924 B und DD 260 332 A1.

Es ist daher eine Aufgabe der vorliegenden Erfindung, eine Kraftmessdose vorzusehen, die die oben erwähnten Nachteile überwindet. Insbesondere ist eine Kraftmessdose vorzusehen, die einfacher herzustellen ist und bei der die Kraftmesssensoren einfacher anzubringen und zu verschalten sind.

Diese Aufgabe wird gelöst durch eine Kraftmessdose nach Anspruch 1.

Der Messkörper weist eine einfach herzustellende Struktur auf. Im Idealfall sind lediglich drei Vertiefungen (Nuten) im Messkörper vorzusehen, die von außen einfach herstellbar sind. Zwei der Nuten werden in die Oberseite oder Unterseite eingearbeitet. Die dritte Nut wird in die andere, gegenüberliegende Seite eingearbeitet. Weitere Nuten sind nicht zwingend erforderlich. Die Bearbeitung des Messkörpers ist somit einfach.

Die Dehnungsmesssensoren (Dehnungsmessstreifen, DMS) werden entsprechend nur auf einer einzigen Seite vorgesehen, nämlich auf der axial innen liegenden zweiten Seite, da die zweite Seite innenseitig angeordnet ist und ohne weiteren Aufwand gegenüber der Außenwelt verschließbar ist. Die Verdrahtung der DMS vereinfacht sich. Insgesamt vereinfacht sich somit die Herstellung der Kraftmessdose.

Durch die gewählte Geometrie des Messkörpers können die Dehnungsmesssensoren auf einer einzigen (zusammenhängenden) Fläche angeordnet werden. Die Verformung dieser Fläche ist ausreichend groß, so dass die Dehnungsmesssensoren der Wheatstoneschen Schaltung ausreichend unterschiedlich große Signale zur Auswertung erzeugen. Die Fläche, wo die Dehnungsmesssensoren angeordnet sind, ist vorzugsweise stufenlos ausgebildet, was die Applikation der Dehnungsmesssensoren vereinfacht (z.B., Aufkleben von Folien-DMS).

Dies äußert sich ferner darin, dass die Dehnungsmesssensoren zwischen der ersten und zweiten Vertiefungszone an einer vorzugsweise stufenlosen Kontaktierungsfläche vorgesehen sind.

Insbesondere weist der Messkörper ferner einen, vorzugsweise hülsenförmigen, Stützkörper auf, wobei der Hauptkörper koaxial auf dem Stützkörper angeordnet ist.

Der Stützkörper definiert einen Innenraum der Kraftmessdose, wo die Dehnungsmesssensoren geschützt vorgesehen werden können. Der Innenraum wird benötigt, um der Kraftmessdose ein ausreichendes Spiel zur Verformung bereitzustellen. Der Innenraum ist vorzugsweise gegenüberliegend zu der Stelle der Kraftmessdose angeordnet, wo die von außen wirkende Kraft üblicherweise angreift. Dies bedeutet mit anderen Worten, dass sich der Messkörper der Kraftmessdose in den Innenraum hinein bewegt während einer Verformung.

Bei einer weiteren besonderen Ausgestaltung sind die Vertiefungszonen derart axial tief im Hauptkörper ausgebildet, derart radial breit ausgebildet und radial derart relativ zueinander positioniert, dass die Kontaktierungsfläche einen sich in der radialen Richtung signifikant verändernden Verformungsgradienten aufweist.

Diese Maßnahme stellt sicher, dass die Dehnungsmesssensoren an einer einzigen Seite (Fläche) angeordnet werden können. Die Verformungen sind ausreichend groß, um die DMS (der Wheatstoneschen Vollbrücke) so zu verformen, dass ein auswertbares Signal erzeugt wird.

Erfindungsgemäß sind die Vertiefungszonen axial derart tief im Hauptkörper ausgebildet, radial derart breit ausgebildet und radial derart relativ zueinander positioniert, dass eine entlang der Mittelachse auf die obere Seite ausgeübte Kraft in einem Kraftfluss resultiert, der entlang der Kontaktierungsfläche geführt ist bzw. der näher zur Kontaktierungsfläche als zu einer imaginären Ebene liegt, die durch einen Boden der ersten Vertiefungszone definiert ist.

Der Kraftfluss wird also entlang der Kontaktierungsfläche geleitet. Dadurch wird sichergestellt, dass die Verformungen der Kontaktierungsfläche ausreichend groß sind, um die Dehnungsmesssensoren der Wheatstoneschen Schaltung auf einer einzigen Seite, d.h. örtlich relativ nah zueinander, in der gleichen Fläche zu positionieren.

Vorzugsweise sind die Vertiefungszonen durch ringförmige Nuten im Hauptkörper ausgebildet.

Erfindungsgemäß ist eine (axiale) Tiefe der Vertiefungszone größer als eine (axiale) Tiefe der zweiten Vertiefungszone ist, wobei die axiale Tiefe der ersten Vertiefungszone vorzugsweise so gewählt ist, dass sie sich in der axialen Richtung nicht mit einer axialen Tiefe der dritten Vertiefungszone überlappt.

Diese Ausgestaltung des Messkörpers stellt sicher, dass der Kraftfluss nahe der Kontaktierungsfläche verläuft.

Bei einer weiteren besonderen Ausgestaltung ist die Kontaktierungsfläche im Wesentlichen senkrecht zur Mittelachse orientiert.

Dort treten die größten Verformungen auf, so dass das Messsignal groß wird.

Insbesondere wirkt die zu messende Kraft senkrecht auf den Körper und parallel zur Mittelachse auf den Messkörper ein.

Vorzugsweise sind die Dehnungsmesssensoren, die zur Erzeugung des Signals benötigt werden, zu einer Wheatstoneschen Vollbrücke zusammengeschaltet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Seitenansicht (Fig. 1A) einer erfindungsgemäßen Kraftmessdose und einen Querschnitt (Fig. 1B) dieser Kraftmessdose entlang einer Mittelachse;
- Figur 2: einen Querschnitt einer herkömmlichen Kraftmessdose gemäß der DE' 629 C2;
- Figur 3: einen Querschnitt einer weiteren herkömmlichen Kraftmessdose gemäß der DE'683 A1;
- Figur 4: eine Unteransicht eines Teils einer Unterseite der Kraftmessdose der Fig. 1 einschließlich eines Schaltungsplans;
- Figur 5: eine Schaltbild einer Wheatstoneschen Vollbrücke.

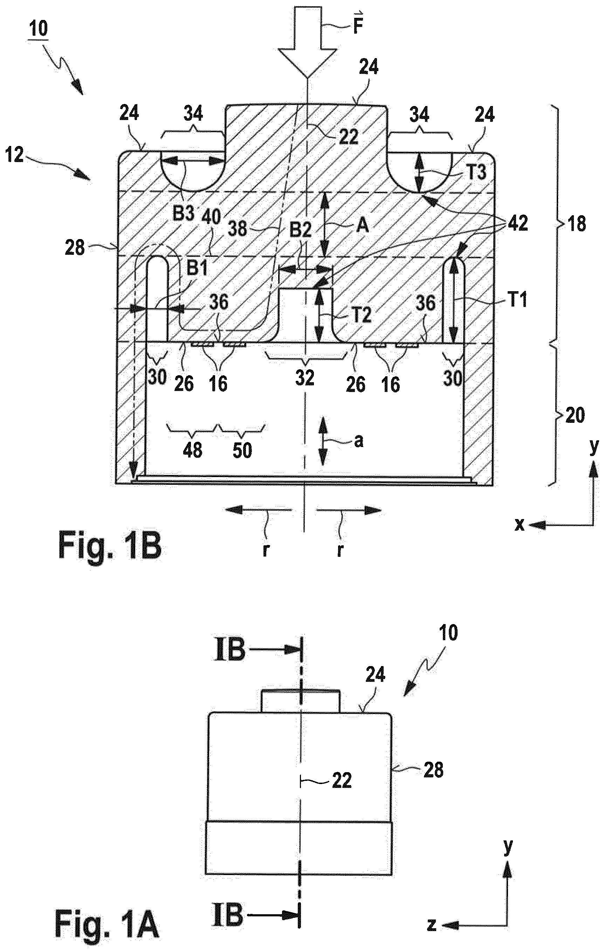

Fig. 1A zeigt eine Seitenansicht eines Kraftaufnehmers, insbesondere einer Kraftmessdose 10, gemäß der Erfindung. Fig. 1B zeigt eine Schnittansicht entlang einer Symmetrie- bzw. Mittelachse 22 der Kraftmessdose 10 der Fig. 1A. Nachfolgend wird die Kraftmessdose 10 unter gleichzeitiger Bezugnahme auf die Fig. 1A und 1B beschrieben werden. Die Maßstäbe der Darstellungen der Fig. 1A und 1B unterscheiden sich. Der Querschnitt der Fig. 1B ist gegenüber der Kraftmessdose 10 der Fig. 1A vergrößert. Die Ansicht der Fig. 1B zeigt den Schnitt entlang der Linie IB-IB in Fig. 1A.

Die Kraftmessdose 10 weist einen elastisch deformierbaren Messkörper 12 und eine daran gekoppelte Kraftmesseinrichtung 14 auf. Der Messkörper 12 ist im Wesentlichen zylindrisch ausgebildet. Der Messkörper 12 ist vorzugsweise aus hochfestem Edelstahl hergestellt, so dass Verwendungen der Kraftmessdose 10 unter schwierigsten Umweltbedingungen möglich sind. Die Kraftmesseinrichtung 14 umfasst mehrere Dehnungsmesssensoren 16, insbesondere mehrere Dehnungsmessstreifen (DMS), die vorzugsweise zu einer DMS-Vollbrücke zusammengeschaltet sind, wie es nachfolgend noch näher unter Bezugnahme auf die Figuren 4 und 5 erläutert werden wird. Ferner kann die Kraftmesseinrichtung 14 einen hier nicht näher gezeigten und beschriebenen Verstärker umfassen, um zusammen mit den DMS dauerhaft zuverlässige und exakte Messergebnisse (Signale) zu liefern.

Die Kraftmessdose 10 kommt bei unterschiedlichsten Anwendungen zum Einsatz, wie zum Beispiel beim Wiegen von Gegenständen, in Fertigungsstraßen, in Prüfanlagen sowie in Drehmomentstützen, um nur einige Fälle zu nennen. Neben einem kundenspezifischen Design (z.B. variierende Außenabmessungen und Höhen) weist die Kraftmessdose 10 optional eine hohe Überlastfähigkeit, eine Temperaturkompensation (z.B. -40°C bis +80°C), eine hohe EMV-Festigkeit von z.B. 200 V/m, keinen Nullpunktdrift (d.h. Nachkalibrierungen sind nicht erforderlich), eine konstante Messgenauigkeit über den gesamten Temperaturbereich, die Fähigkeit zur Messung von Zug- und/oder Druckkräften, eine Grenzlast von 150% bzw. eine Drucklast von 300% einer Nennlast und/oder Ähnliches auf.

Der Messkörper 12 weist einen Hauptkörper 18 auf, der vorzugsweise scheibenförmig ausgebildet ist. Der Hauptkörper 18 ist zylindersymmetrisch. Ferner kann der Messkörper 12 einen Stützkörper 20 aufweisen, der vorzugsweise hülsenförmig ausgebildet ist. Der Hauptkörper 18 und der Stützkörper 20 sind in diesem Fall bevorzugt einstückig ausgebildet. Der Messkörper 12 kann zusätzlich einen (hier nicht näher bezeichneten) Boden bzw. Deckel aufweisen, der den Stützkörper 20 (von unten) verschließt, um die Dehnungsmesssensoren 16 im Inneren des Körpers 12 zu schützen.

Der Hauptkörper 18 weist eine Mittelachse 22 auf. Die Mittelachse 22 definiert im Beispiel der Fig. 1 eine (Zylinder-)Symmetrieachse. Der Hauptkörper 18 weist ferner eine axial außen (oben) liegende Oberseite 24, eine axial innen (unten) liegende Unterseite 26 sowie eine radial außen liegende Umfangsfläche 28 auf. Der Stützkörper 20 weist eine radial außen liegende Mantelfläche, eine stirnseitige Unterseite sowie eine radial innen liegende Mantelfläche auf, die hier nicht näher bezeichnet sind. Die Umfangsfläche 28 des Hauptkörpers 18 geht in der axialen Richtung (siehe Pfeil a parallel zur Achse 22) stufenlos in die äußere Mantelfläche des Stützkörpers 20 über. Die Unterseite 26 des Hauptkörpers 18 geht stufenlos in die innere Mantelfläche des Stützkörpers 20 über, wie es nachfolgend noch näher unter Bezugnahme auf eine radial außen liegende Nut in der Unterseite 26 des Hauptkörpers 18 noch näher ausgeführt werden wird. Die radiale Richtung ist in der Fig. 1B mit einem Pfeil r angedeutet.

Im Nachfolgenden wird die Bauform des Hauptkörpers 18 näher betrachtet. Der Hauptkörper 18 weist mehrere Vertiefungszonen 30 bis 34 auf, um einen gegen Querkräfte unempfindlichen s- bzw. z-förmigen Hauptkörper 18 zu definieren. Eine erste (vorzugsweise ringförmige) Vertiefungszone 30 sowie eine zweite (vorzugsweise ringförmige) Vertiefungszone 32 sind in der Unterseite 26 vorgesehen. Die erste Vertiefungszone 30 ist koaxial zur Achse 22 angeordnet. Die zweite Vertiefungszone 32 ist koaxial zur Achse 22 angeordnet, so dass die Vertiefungszonen 30 und 32 koaxial zueinander angeordnet sind. Die dritte Vertiefungszone 34 ist in der Oberseite 24 vorgesehen. Die Vertiefungszonen 30 bis 34 sind jeweils durch eine ringförmige, in der Umfangsrichtung kontinuierliche Nut definiert. Es versteht sich, dass die Vertiefungen in der Umfangsrichtung auch diskret verteilt angeordnet sein können. Ferner versteht es sich, dass alternativ die erste und zweite Vertiefungszone 30 und 32 in der Oberseite 24 und die dritte Vertiefungszone 34 in der Unterseite 26 ausgebildet sein können, ohne von der S- bzw. Z-Form des Hauptkörpers (im Querschnitt der Fig. 1B) abzuweichen. Die DMS 16 werden in diesem Fall vorzugsweise auf der Oberseite 24 vorgesehen. Sie können aber auch auf der Unterseite 26 verbleiben, obwohl die Vertiefungszonen 30 bis 34 ihre Positionen in der axialen Richtung tauschen.

Die DMS 16 sind an einer Kontaktierungsfläche 36 des Hauptkörpers 18 angebracht (z.B. auf Folien aufgeklebt oder mittels Sputter-Technik aufgebracht). Die Kontaktierungsfläche 36 ist ein Teil der Unterseite 26. Die Kontaktierungsfläche 36 und die Relativanordnung der DMS 16 darauf wird unter Bezugnahme auf Fig. 4 noch näher beschrieben werden. Die Kontaktierungsfläche 36 ist vorzugsweise stufenlos ausgebildet. Dies bedeutet, dass die Kontaktierungsfläche 36 keine Stufe aufweist, sondern (im Querschnitt) durch einen kontinuierlichen stetigen Verlauf geprägt ist, der auch gekrümmt sein kann. Die Kontaktierungsfläche 36 ist vorzugsweise senkrecht zur Achse 22 orientiert. Die Kontaktierungsfläche 36 ist vorzugsweise eben bzw. plan ausgebildet, d.h. sie ist nicht gekrümmt, also weder konkav noch konvex. Selbstverständlich kann die Kontaktierungsfläche 36 auch gekrümmt (z.B. ballig) und/oder gegenüber der Achse 22 (mit einem von 90° abweichenden Winkel) geneigt sein.

Wie es nachfolgend noch näher erläutert werden wird, sind die DMS 16 der DMS-Vollbrücke, die die (Verformungsmess-)Signale liefern, die zur Bestimmung der einwirkenden Kraft F zwingend benötigt werden, ausschließlich entlang der Kontaktierungsfläche 36 angeordnet. Dies bedeutet, dass die DMS 16 nur auf einer Seite des Hauptkörpers 18, nämlich im Beispiel der Fig. 1 nur an der Unterseite 26, angeordnet sind. Dies vereinfacht die Anbringung der DMS 16 am Hauptkörper 18, insbesondere wenn die Kontaktierungsfläche 36 stufenlos (und insbesondere eben) ausgebildet ist. Die DMS 16 können dann z.B. als Folien-DMS auf die Kontaktierungsfläche 36 aufgeklebt werden. Selbstverständlich können weitere DMS an anderen Orten vorgesehen sein, auch an abweichenden Oberflächen. Diese anderen (nicht gezeigten) DMS werden aber nicht zwingend zum Bestimmen der Kraft F benötigt.

In der Fig. 1B ist ferner ein (Haupt-)Kraftfluss 38 durch eine Strichlinie angedeutet. Der Kraftfluss 38 verdeutlicht den (wesentlichen)Weg bzw. eine Verteilung der Kraft F durch den Messkörper 12. Die Kraft F wirkt normalerweise senkrecht auf die Oberseite 24, parallel zur Mittelachse 22. Der Messkörper 12 steht im Bereich der Achse 22 vorzugsweise axial vor. Dieser axiale Vorsprung ist an der Oberseite 24 insbesondere ballig ausgebildet, um die Kraft F möglichst konzentrisch einzuleiten.

Nachfolgend wird der Verlauf des Kraftflusses vom Eintrittspunkt bis zum Austrittspunkt beschrieben. Der Kraftfluss 38 verläuft im Wesentlichen zuerst parallel entlang der Mittelachse 22, weicht dann wegen der zweiten Vertiefungszone 32 leicht radial nach außen aus, verläuft dann relativ nahe der Kontaktierungsfläche 36 radial nach außen, steigt in unmittelbarer Nähe der ersten Vertiefungszone 30 axial an, verläuft eng um die erste Vertiefungszone 30 herum, um anschließend den Messkörper 12 über den Stützkörper 20 axial zu verlassen.

Es versteht sich, dass der in Fig. 1B gezeigte Kraftfluss 38 idealisiert dargestellt ist. Der Kraftfluss 38 verläuft natürlich z.B. genauso durch die rechte Hälfte des Messkörpers 12, was in der Fig. 1B aber nicht gezeigt ist. Des Weiteren verteilt sich die Kraft F durch den gesamten Körper 12. Die Kraft F konzentriert sich aber auf den Bereich, der durch den eingezeichneten Verlauf des Kraftflusses 38 hervorgehoben ist. Dies wurde durch FEM-Berechnungen verifiziert. Weil der Kraftfluss 38 so "nahe" entlang der Kontaktierungsfläche 36 verläuft, wird die Kontaktierungsfläche 36 in der radialen Richtung (d.h. senkrecht zur Achse 22) ausreichend unterschiedlich stark mit einer Normalspannung beaufschlagt, so dass die einzelnen DMS 16, die zur DMS-Vollbrücke verschaltet sind, ausreichend differierende Signale liefern, um ein der einwirkenden Kraft F entsprechendes Gesamtsignal in der Vollbrücke zu erzeugen.

Der Verlauf bzw. die Verteilung des Kraftflusses 38 durch den Messkörper 12 wird durch die Abmessungen und (Relativ-)Positionen der Vertiefungszonen 30, 32 und 34 wesentlich beeinflusst. Dies wird im Nachfolgenden näher betrachtet werden.

Die Vertiefungszonen 30 bis 34 weisen jeweils (in der radialen Richtung) eine spezifische Breite B1, B2 bzw. B3 sowie (in der axialen Richtung) eine spezifische Tiefe T1, T2 bzw. T3 auf.

Generell gilt, dass die erste Vertiefungszone 30 radial am weitesten außen angeordnet ist und die zweite Vertiefungszone 32 radial am weitesten innen angeordnet ist. Generell gilt ferner, dass die dritte Vertiefungszone 34 radial zwischen der ersten und zweiten Vertiefungszone 30 und 32 angeordnet ist und auf der gegenüberliegenden Seite angeordnet ist. Außerdem gilt generell, dass sich die Tiefe T2 der zweiten Vertiefungszone 32 in der axialen Richtung nicht mit der Tiefe T3 der dritten Vertiefungszone 34 überlappen sollte. Diese Maßnahme stellt sicher, dass der Körper 12 zwischen den Nuten der zweiten und dritten Vertiefungszone 32 und 34 ausreichend "dick" ist, um den Kraftfluss 38 näher an der Nut der zweiten Vertiefungszone 32 als an der Nut der dritten Vertiefungszone 34 zu halten. Ähnliches gilt für die Tiefe T1 der Nut der ersten Vertiefungszone 30. Die Tiefe T1 sollte sich in der axialen Richtung nicht mit der Tiefe T3 der dritten Vertiefungszone 34 überlappen. Generell gilt, dass die erste und zweite Vertiefungszone 30 und 32 möglichst weit (innerhalb des Körpers 12) axial beabstandet (sieh Abstand A) relativ zur dritten Vertiefungszone 34 positioniert sein sollten, insbesondere wenn man Niveaus der Böden 42 der Nuten der Vertiefungszonen 30 bis 34 betrachtet (vgl. punktierte horizontale Linien in Fig. 1B).

Die (geometrischen) Formen der Nuten der Vertiefungszonen 30 bis 34 sind frei wählbar, wobei zylindergeometrische Konturen bevorzugt sind. Die Böden 42 der Nuten der ersten Vertiefungszone 30 und der dritten Vertiefungszone 34 sind im Querschnitt der Fig. 1B exemplarisch sphärisch geformt. Der Boden der Nut der zweiten Vertiefungszone 32 ist exemplarisch rechteckig geformt. Die Breite B1 ist kleiner als die Breite B2. Die Breite B1 ist kleiner als die Breite B3. Die Breite B2 ist kleiner als die Breite B3. Die Tiefe T1 ist größer als die Tiefe T2. Die Breiten B1 und B2 sind so gewählt, dass die Kontaktierungsfläche 36, die zwischen den Vertiefungszonen 30 und 32 an der Unterseite 26 definiert ist, vorzugsweise möglichst groß ist, um die Applikation der DMS 16 zu vereinfachen.

Die Breite B3 und die Tiefe T3 der dritten Vertiefungszone 34 sind so gewählt, dass der Kraftfluss 38 durch den Körper 12 möglichst so verläuft, wie es in der Fig. 1B gezeigt ist. Die Breiten, Tiefen und radialen Relativpositionen der Vertiefungszonen 30 bis 34 stellen Parameter dar, die so zu wählen sind, dass sich die Normalenspannung in der Kontaktierungsfläche 36 in der radialen Richtung möglichst stark ändert.

Vergleicht man den Kraftfluss 38 der Erfindung, wie er in der Fig. 1B gezeigt ist, mit dem Kraftfluss 38', der sich im Körper 12' der konventionellen Kraftmessdose 10' gemäß der eingangs erwähnten DE'629 C2 einstellt, so fällt auf, dass der Kraftfluss 38' in Fig. 2 weit entfernt von der Kontaktierungsfläche 36' der DMS 16' verläuft. Der Grund dafür ist darin zu sehen, dass der Messkörper 12' in Übergangsbereichen zwischen den Vertiefungszonen 30' bis 34' relativ "dünn" ausgebildet ist. Der Messkörper 12' der Fig. 2 ist (in radialer Richtung) zwischen der zweiten Vertiefungszone 32' und der dritten Vertiefungszone 34' relativ dünn, nämlich stegartig, ausgebildet. Das Gleiche gilt für die radial außen liegenden Bereiche des Messkörpers 12' in Bezug auf die erste Vertiefungszone 30'. Der Kraftfluss 38' verläuft im Wesentlichen horizontal im Bereich der DMS 16'. Die auf der Oberseite 24' angeordneten DMS 16' messen auf Dehnung des Messkörpers 12', wohingegen die an der Unterseite 26' angeordneten DMS 16' auf Stauchung messen. Die Gesamtheit dieser DMS 16' ist wiederum zu einer DMS-Vollbrücke verschaltet. Die Dehnungs-DMS 16' sind axial "höher" als die Stauchungs-DMS 16'angeordnet. Die Dehnungs-DMS 16' und die Stauchungs-DMS 16' sind auf sich gegenüberliegenden Seiten 24' und 26' des Messkörpers 12' angeordnet. Die Normalenspannung ändert sich an der Oberseite 24' bzw. an der Unterseite 26' des Messkörpers 12' der Fig. 2 nicht ausreichend stark, so dass die Dehnungs-DMS 16' und die Stauchungs-DMS 16' nicht auf der gleichen Seite angeordnet werden können.

Ferner fällt bei einem Vergleich der Kraftmessdosen 10 und 10' der Fig. 1 und 2 auf, dass die Kraftmessdose 10 gemäß der Erfindung ohne Abdeckungen bzw. Deckel für die DMS 16 auskommt, weil die DMS 16 innenseitig angeordnet sind.

Die Kraftmessdose 10 zeichnet sich also u.a. dadurch aus, dass solche DMS 16, die zu der (Vollbrücken-)Schaltung gehören und die zwingend zum Bestimmen des Signals benötigt werden, das der einwirkenden Kraft F entspricht, auf einer einzigen Seite des Messkörpers 12 vorgesehen sind, wie z.B. an der Unterseite 26 oder Oberseite 24. Aus der bisherigen Offenbarung versteht der Fachmann, dass der Kraftfluss 38 auch so gelenkt werden könnte, dass er im Wesentlichen entlang der Oberseite 24 verläuft, wobei in diesem Fall die erste und zweite Vertiefungszone 30 und 32 in der Oberseite 24 vorzusehen sind und die dritte Vertiefungszone 34 in der Unterseite 26 vorzusehen ist. Ferner ist klar, dass weitere (nicht gezeigte und nicht benannte) Vertiefungszonen vorgesehen werden können, was jedoch die Herstellung des Messkörpers 12 komplexer macht.

Fig. 4 zeigt eine Unteransicht auf einen vergrößert dargestellten, zentralen Teil der Unterseite 26 der Kraftmessdose 10 der Fig. 1 zur Verdeutlichung einer möglichen Verschaltung der DMS 16, die hier z.B. auf die Kontaktierungsfläche 36 geklebt sind. Im Zentrum der Darstellung befindet sich die Mittelachse 22, die senkrecht auf der Zeichnungsebene der Fig. 4 steht. Die Mittelachse 22 ist im Zentrum der zweiten (kreisförmigen) Vertiefungszone 32 angeordnet. Die ringförmige Kontaktierungsfläche 36 ist (imaginär) in zwei Ringflächen 48 und 50 unterteilt (siehe Hilfslinie 51), die in der radialen Richtung r eine identische Breite aufweisen können. Die erste Ringfläche 48 liegt radial außen. Die zweite Ringfläche 50 liegt radial innen. Die zweite Ringfläche 50 liegt radial zwischen der ersten Ringfläche 48 und der zweiten Vertiefungszone 32. Die erste Ringfläche 48 liegt radial zwischen der ersten Vertiefungszone 30 und der zweiten Ringfläche 50. In der Fig. 4 ist im Wesentlichen die ringförmige Kontaktierungsfläche 36 sowie die zweite zentrale Vertiefungszone 32 gezeigt, die alle koaxial zur Mittelachse 22 angeordnet sind.

In der Fig. 4 sind exemplarisch sechzehn einzelne DMS 16-1 bis 16-16 gezeigt, die die Kraftmesseinrichtung 14 als redundantes System ausbilden. Die einzelnen DMS 16 sind exemplarisch zu zwei (Wheatstoneschen) Vollbrücken aus jeweils acht DMS 16 verschaltet, wobei für ein "besseres" Signal jeweils zwei DMS 16 in jedem Brückenzweig in Serie geschaltet sind, so dass eine Vollbrücke aus acht einzelnen DMS 16 besteht.

Jeweils zwei einzelne DMS 16 sind unmittelbar benachbart zueinander am (nahezu) gleichen Ort vorgesehen (vgl. z.B. die auf 12.00 Uhr radial innen angeordneten DMS 16-1 und 16-9). Die DMS 16 sind über Leitungen 52 zu den zwei oben erwähnten (redundanten) Vollbrücken verschaltet.

Die DMS 16-1 und 16-2 sind diametral gegenüberliegend (12.00 Uhr und 6.00 Uhr, radial innen) angeordnet und in Serie geschaltet, um den Widerstand R1 (bestehend aus R1.1 und R1.2) zu bilden (vgl. Basisschaltung für Wheatstonesche Vollbrücke gemäß Fig. 5). Der Widerstand R1 dient vorzugsweise zum Messen von Verformungen des Typs "Dehnung" (siehe "gestreckt" im Schaltbild der Fig. 5). Der zweite Widerstand R2 ist durch die DMS 16-3 (12.00 Uhr, R2.1, radial außen in Fig. 4) und 16-4 (6.00 Uhr, R2.2, radial außen) gebildet, die wiederum diametral gegenüberliegend zueinander angeordnet sind und seriell verschaltet sind. Der zweite Widerstand R2 misst vorzugsweise Stauchungen. Die Widerstände R1 und R2 sind entlang einer gemeinsamen imaginären (vertikalen) Linie in Fig. 4 angeordnet, die durch die Mittelachse 22 verläuft.

Die DMS 16-5 (9.00 Uhr, R3.1, radial außen) und 16-6 (3.00 Uhr, R3.2, radial außen) bilden gemeinsam den dritten Widerstand R3, der vorzugsweise zur Messung von Stauchungen (vgl. Fig. 5) ausgelegt, ausgerichtet und angeordnet ist. Der vierte Widerstand R4 des Typs Dehnung (vgl. Fig. 5) wird aus den einzelnen DMS 16-7 (9.00 Uhr, radial innen, R4.1) und 16-8 (3.00 Uhr, radial innen, R4.2) gebildet. Die Widerstände sind ebenfalls entlang einer imaginären geraden Linie ausgerichtet, die durch die Mittelachse 22 verläuft. Die Widerstände R1 bis R4 sind "kreuzförmig" zur Mittelachse 22 ausgerichtet. Die Wiederstände R1 bis R4 bilden eine erste DMS-Vollbrücke.

Die einzelnen DMS 16-9 bis 16-16 sind entsprechend ausgerichtet, orientiert und angeordnet und bilden eine zweite (redundante) Vollbrücke, die sich hinsichtlich der Relativanordnung mit der ersten Vollbrücke überlappt.

Es versteht sich, dass mehr oder weniger Vollbrücken eingesetzt werden können, die jeweils aus vier Widerständen bzw. einzelnen DMS 16 gebildet werden. Die Widerstände R1 bis R4 müssen nicht paarweise realisiert sein; sie können auch einzelnen vorgesehen werden. Die Wiederstände R1 bis R4 einer Vollbrücke sind in Umfangsrichtung vorzugsweise jeweils mit einem Winkel von 90° zueinander beabstandet und liegen auf dem gleichen Radius, d.h. weisen (nahezu) den gleichen radialen Abstand zur Mittelachse 22 auf und liegen auf einer imaginären Verbindungslinie, die (senkrecht) durch die Mittelachse 22 verläuft.

Wenn neben den beiden in Fig. 4 gezeigten Vollbrücken weitere Vollbrücken vorgesehen sind, so wird die Relativorientierung der Vollbrücken vorzugsweise so gewählt, dass die Vollbrücken äquidistante Winkelabstände zueinander aufweisen. Dies bedeutet plakativ, dass der in Fig. 4 gezeigten Kreuzanordnung eine weitere Kreuzanordnung überlagert wird, die um 45° gedreht relativ zur Kreuzanordnung der Fig. 4 angeordnet wird.

Ferner versteht es sich, dass die in Fig. 5 getroffene Unterscheidung zwischen DMS des Typs "Stauchung" und des Typs "Dehnung" willkürlich ist. Es können und werden auch DMS 16 des gleichen Typs verwendet. Dies bedeutet mit anderen Worten, dass die DMS 16 einer Vollbrücke auch alle nur Dehnungen oder nur Stauchungen messen können, wenn denn die Relativverformung ausreichend groß ist, wie es nachfolgend noch näher ausgeführt werden wird. In der Fig. 4 messen die DMS 16-1 bis 16-16 z.B. nur Dehnungen. Dies hängt insbesondere von der Geometrie des Messkörpers 12 und der Richtung und Größe der einwirkenden Kraft F ab. Nur Dehnungen oder nur Stauchungen zu messen ist möglich, weil der Unterschied zwischen einer Kraft, die am radial innen liegenden Rand der Kontaktierungsfläche 36 auf die Kontaktierungsfläche 36 wirkt, ausreichend groß im Vergleich zur Kraft am radial außen liegenden Rand der Kontaktierungsfläche 36 ist.

Die durch die Verformung des Messkörpers 12 hervorgerufenen Verformungen der Widerstände R1 bis R4 werden durch die Einbindung in eine elektrische Halterung (Vollbrücke) erfasst und als Spannungssignal in einen (nicht dargestellten) Verstärker eingespeist. Generell sind bei Wheatstoneschen Brücken verschiedene Schaltungsarten möglich, die je nach Anzahl und Orientierung der eingesetzten DMS 16 zu unterschiedlichen Brückenfaktoren führen. Dabei macht man sich im Messkörper 12 zum einen die Querkontraktion zunutze, auch um temperaturbedingte Dehnung (teilweise) zu kompensieren, und zum anderen kann die DMS 16 auf spezielle Weise auf dem Messkörper 12 angeordnet sein, um das Ausgangssignal in Richtung der interessierenden Messgröße zu maximieren und in anderen Richtungen zu kompensieren. Dies gelingt, wenn man mindestens eine Halbbrücke oder besser eine Vollbrücke verwendet und die DMS 16 den Belastungsfall (Biegung, Torsion, Stauchung, Dehnung) auf spezielle Weise auf dem Messkörper 12 verteilt. Bei einer Wheatstoneschen Brücke werden die DMS 16 bei der Halb- und Viertelbrücke mit je zwei bzw. drei Festwiderständen zur Wheatstoneschen Brücke ergänzt (sogenannte Brückenergänzung), wobei in der Regel alle vier denselben Nennwiderstand R1 = R2 = R3 = R4 haben, der auch für die ganze Brücke gilt und alle DMS haben vorzugsweise denselben K-Faktor.

Die Empfindlichkeit kann durch zusätzliche innen oder außen liegende Nuten eingestellt werden, indem Tiefen und Breiten entsprechend gewählt werden. Wenn die DMS 16 auf der Unterseite 26 angebracht sind, kann auf eine Abdeckung verzichtet werden, da der Innenraum durch den (nicht dargestellten) Deckel am Boden des Stützkörpers geschlossen ist.

### Bezugszeichenliste

- 10: Kraftmessdose
- 12: Messkörper
- 14: Kraftmesseinrichtung
- 16: Dehnungsmesssensoren (z.B. Dehnungsmessstreifen, DMS)
- 18: Hauptkörper
- 20: Stützkörper
- 22: Mittelachse
- 24: Oberseite
- 26: Unterseite
- 28: Umfangsfläche
- 30: erste Vertiefungszone
- 32: zweite Vertiefungszone
- 34: dritte Vertiefungszone
- 36: Kontaktierungsfläche
- a: axiale Richtung
- r: radiale Richtung
- A: Abstand
- 38: Kraftfluss
- 40: Hilfslinie
- 42: Boden von 30-34
- B: Breite von 32-34
- T: Tiefe von 32-34
- 48: äußere Ringfläche
- 50: innere Ringfläche
- 51: Hilfslinie
- R: Brücken-Widerstand

## Patentansprüche

1. Kraftmessdose (10) mit einem elastisch deformierbaren Messkörper (12) und mit einer Kraftmesseinrichtung (14), die mehrere Dehnungsmesssensoren (16) umfasst, die so verschaltet sind, dass eine Verformung des Messkörpers (12) in ein Signal umgewandelt wird, welches einer die Verformung hervorrufenden Kraft (F) entspricht;
wobei der Messkörper (12) einen zylindrischen Hauptkörper (18) mit einer Mittelachse (22) aufweist, wobei der Hauptkörper (18) aufweist:
eine axial außen liegende erste Seite (24), die einen derartigen axialen Vorsprung zur Einleitung der Kraft (F) aufweist, dass der Messkörper (12) im Bereich der Mittelachse (22) vorsteht;
eine axial innen liegende zweite Seite (26), die ersten Seite (24) axial gegenüberliegt; und
eine radial außen liegende Umfangsfläche (28);
wobei die zweite Seite (26) eine erste koaxiale, radial außen liegende Vertiefungszone (30) und eine zweite koaxiale, radial innen liegende Vertiefungszone (32) aufweist;
wobei die erste Seite (24) eine dritte koaxiale Vertiefungszone (34) aufweist, die radial zwischen der ersten und zweiten Vertiefungszone (30, 32) angeordnet ist;
**dadurch gekennzeichnet, dass** jeder der Dehnungsmesssensoren (16), der zur Bestimmung der einwirkenden Kraft (F) benötigt wird, an der zweiten Seite (26) des Hauptkörpers (18) angebracht ist,
wobei die Dehnungsmesssensoren (16) zwischen der ersten und zweiten Vertiefungszone (30, 32) an einer Kontaktierungsfläche (36) vorgesehen sind,
wobei die Vertiefungszonen (30-34) axial derart tief im Hauptkörper (18) ausgebildet sind, radial derart breit ausgebildet sind und radial derart relativ zueinander positioniert sind, dass die entlang der Mittelachse (22) auf die erste Seite (24) ausgeübte Kraft (F) in einem Kraftfluss (38) resultiert, der entlang der Kontaktierungsfläche (36) geführt ist und der näher zur Kontaktierungsfläche (36) als zu einer imaginären Ebene (40) liegt, die durch einen Boden (42) der ersten Vertiefungszone (30) definiert ist, und
wobei die Tiefe (T1) der ersten Vertiefungszone (30) größer als die Tiefe (T2) der zweiten Vertiefungszone (32) ist.

2. Kraftmessdose nach Anspruch 1, wobei die Kontaktierungsfläche (36) stufenlos ist.

3. Kraftmessdose nach Anspruch 1 oder 2, wobei der Messkörper (12) ferner einen Stützkörper (20) aufweist und wobei der Hauptkörper (18) koaxial auf dem Stützkörper (20) angeordnet ist.

4. Kraftmessdose nach einem der Ansprüche 1 bis 3, wobei die Vertiefungszonen (30-34) derart axial tief im Hauptkörper (18) ausgebildet sind, derart radial breit ausgebildet sind und radial derart relativ zueinander positioniert sind, dass die Kontaktierungsfläche (36) einen sich in der radialen Richtung ändernden Verformungsgradienten aufweist.

5. Kraftmessdose nach einem der Ansprüche 1 bis 4, wobei die Vertiefungszonen (30-34) durch ringförmige Nuten im Hauptkörper (18) ausgebildet sind.

6. Kraftmessdose nach Anspruch 1, wobei die Tiefe (T1) der ersten Vertiefungszone (30) so gewählt ist, dass sie sich in der axialen Richtung nicht mit der axialen Tiefe (T3) der dritten Vertiefungszone (34) überlappt.

7. Kraftmessdose nach einem der Ansprüche 1 bis 6, wobei die Kontaktierungsfläche (36) senkrecht zur Mittelachse (22) orientiert ist.

8. Kraftmessdose nach einem der Ansprüche 1 bis 7, wobei die Dehnungsmesssensoren (16), die zur Erzeugung des Signals zwingend benötigt werden, zu einer Wheatstonschen Vollbrücke zusammengeschaltet sind.

## Claims

1. A force-measuring cell (10) including an elastically deformable measuring body (12) and a force-measuring device (14) which includes multiple strain-gauge sensors (16) interconnected such that a deformation of the measuring body (12) is converted into a signal corresponding to a force (F) causing the deformation;
wherein the measuring body (12) comprises a cylindrical main body (18) including a central axis (22), wherein the main body (18) comprises:
an axially outer first side (24) comprising an axial projection for introduction of the force (F) such that the measuring body (12) protrudes in a region of the central axis (22);
an axially inner second side (26) axially opposite to the first side (24); and
a radially outer circumferential surface (28);
wherein the second side (26) comprises a first coaxial radially-outer recess zone (30) and a second coaxial radially-inner recess zone (32);
wherein the first side (24) comprises a third coaxial recess zone (34) arranged radially between the first and second recess zones (30, 32);
**characterized in that**
each of the strain-gauge sensors (16) required for the determination of the acting force (F) is attached to the second side (26) of the main body (18),
wherein the strain-gauge sensors (16) are provided between the first and second recess zones (30, 32) on a contact surface (36),
wherein the recess zones (30-34) are formed axially such deep in the main body (18), are formed radially such wide and are positioned radially relative to each other such that the force (F) acting along the central axis (22) on the first side (24) results in a flow of force (38) guided along the contact surface (36) and being closer to the contact surface (36) than to an imaginary plane (40) defined by a base (42) of the first recess zone (30), and
wherein the depth (T1) of the first recess zone (30) is greater than the depth (T2) of the second recess zone (32).

2. The force-measuring cell of claim 1, wherein the contact surface (36) is stepless.

3. The force-measuring cell of claim 1 or 2, wherein the measuring body (12) further comprises a supporting body (20), and wherein the main body (18) is arranged coaxially on the supporting body (20).

4. The force-measuring cell of any of claims 1 to 3, wherein the recess zones (30-34) are formed axially such deep in the main body (18), are formed radially such wide and are positioned radially to each other such that the contact surface (36) comprises a gradient of deformation which changes in the radial direction.

5. The force-measuring cell of any of claims 1 to 4, wherein the recess zones (30-34) are formed by annular grooves in the main body (18).

6. The force-measuring cell of claim 1, wherein the depth (T1) of the first recess zone (30) is selected such that it does not overlap in the axial direction with the axial depth (T3) of the third recess zone (34).

7. The force-measuring cell of any of claims 1 to 6, wherein the contact surface (36) is orientated perpendicular to the central axis (22).

8. The force-measuring cell of any of claims 1 to 7, wherein the strain-gauge sensors (16), which are compellingly required for the generation of the signal, are connected to form a full Wheatstone bridge circuit.

## Revendications

1. Cellule de charge (10), comprenant un corps de mesure (12) à déformation élastique et un dispositif de mesure de force (14) comprenant plusieurs extensomètres (16) qui sont interconnectés de telle sorte qu'une déformation du corps de mesure (12) est convertie en un signal qui correspond à une force (F) causant la déformation ;
le corps de mesure (12) présentant un corps principal cylindrique (18) pourvu d'une line médiane (22), le corps principal (18) présentant :
une première face (24) située axialement à l'extérieur qui présente une saillie axiale pour introduire la force (F) telle que le corps de mesure (12) fait saillie au niveau de la ligne médiane (22) ;
une deuxième face (26) située axialement à l'intérieur qui est axialement opposée à la première face (24) ; et
une surface circonférentielle (28) située radialement à l'extérieur ;
dans laquelle la deuxième face (26) présente une première zone en creux coaxiale (30), située radialement à l'extérieur, et une deuxième zone en creux coaxiale (32), située radialement à l'intérieur ;
dans laquelle la première face (24) présente une troisième zone en creux coaxiale (34) qui est disposée radialement entre la première et la deuxième zone en creux (30, 32) ;
**caractérisée en ce que** chacun des extensomètres (16), qui sont nécessaires pour déterminer la force active (F), est placé sur la deuxième face (26) du corps principal (18),
les extensomètres (16) étant prévus entre la première et la deuxième zone en creux (30, 32) sur une zone de mise en contact (36),
dans laquelle les zones en creux (30 à 34) sont réalisées à une profondeur axiale dans le corps principal (18) telle, réalisées à une largeur radiale telle, et positionnées radialement les unes par rapport aux autres de telle sorte que la force (F) exercée le long de la ligne médiane (22) sur la première face (24) aboutit à un flux de force (38) qui est guidé le long de la surface de mise en contact (36) et qui est situé plus près de la surface de mise en contact (36) que d'un plan imaginaire (40) qui est défini par un fond (42) de la première zone en creux (30), et
dans laquelle la profondeur (T1) de la première zone en creux (30) est supérieure à la profondeur (T2) de la deuxième zone en creux (32).

2. Cellule de charge selon la revendication 1, dans laquelle la surface de mise en contact (36) est continue.

3. Cellule de charge selon la revendication 1 ou 2, dans laquelle le corps de mesure (12) présente en outre un corps d'appui (20), et dans laquelle le corps principal (18) est disposé coaxialement sur le corps d'appui (20).

4. Cellule de charge selon l'une quelconque des revendications 1 à 3, dans laquelle les zones en creux (30 à 34) sont réalisées à une profondeur axiale dans le corps principal (18) telle, sont réalisées à une largeur radiale telle, et sont positionnées radialement les unes par rapport aux autres de telle sorte que la surface de mise en contact (36) présente un gradient de déformation variable dans la direction radiale.

5. Cellule de charge selon l'une quelconque des revendications 1 à 4, dans laquelle les zones en creux (30 à 34) sont réalisées par des rainures annulaires dans le corps principal (18).

6. Cellule de charge selon la revendication 1, dans laquelle la profondeur (T1) de la première zone en creux (30) est choisie de telle sorte que dans la direction axiale, elle ne se chevauche pas avec la profondeur axiale (T3) de la troisième zone en creux (34).

7. Cellule de charge selon l'une quelconque des revendications 1 à 6, dans laquelle la zone de mise en contact (36) est orientée perpendiculairement à la ligne médiane (22).

8. Cellule de charge selon l'une quelconque des revendications 1 à 7, dans laquelle les extensomètres (16), qui sont indispensables à la génération du signal, sont interconnectés en pont de Wheatstone intégral.
